# EUROPEAN PATENT APPLICATION

(11) **EP 3 062 557 A1**
(43) Date of publication of application: **31.08.2016**
(21) Application number: 15156313.7
(22) Date of filing: 24.02.2015
(51) Int. Cl.: H04W 36/00, H04W 84/00, H04W 36/14, H04W 36/32

(54) **Apparatus, method and computer program for a base station transceiver in a vehicle**

(71) Applicant: Nash Technologies GmbH, 90491 Nürnberg (DE)
(72) Inventor: Wagner, Karl-Ludwig, 90552 Röthenbach (DE)
(74) Representative: 2SPL Patentanwälte PartG mbB

(57) **Abstract**

An apparatus, a method and a computer program for a base station transceiver in a vehicle. A base station transceiver (100) generates at least one cell of a mobile communication system (500) for communicating with one or more mobile transceivers (400) in a vehicle (600). An apparatus (10) for the base station transceiver (100) in the vehicle (600) comprises a transceiver module (12) to communicate with the one or more mobile transceivers (400), and a control module (14) to control the transceiver module (12). The control module (14) is further configured to provide information related to a measurement configuration to the one or more mobile transceivers (400) using the transceiver module (12). The information related to the measurement configuration relating to measurements of other cells differing from the at least one cell generated by the base station transceiver (100). The control module (14) is further configured to obtain information related to measurement results based on the information related to the measurement configuration from the one or more mobile transceivers (400) using the transceiver module (12). The control module (14) is further configured to determine information related to a speed of the vehicle (600), and to provide information related to a mobility procedure to the one or more mobile transceivers (400) based on the information related to the measurement results and based on the information related to the speed of the vehicle.

## Description

### Technical Field

Embodiments relate to an apparatus, a method and a computer program for a base station transceiver in a vehicle, and more particularly, but not exclusively, to adaptively configuring neighbor cell measurements at mobile transceivers associated with a mobile base station transceiver.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith roaming options between these networks become available when multiple network layers overlap or at network boundaries, respectively.

Network planning and deployment in cellular communication systems is based on fixed, stationary base stations and may further take into account mobile base and relay station transceivers, which may reside in vehicles, e.g. cars, buses, trains, ships, planes, etc. As demands for digital services are increasing users' expectation of service availability also increases such that mobile access points experience a wider deployment, especially in mass transportation and vehicles. Mobility procedures become more advanced, as handovers and cell reselection may now happen between mobile and/or stationary cells.

### Summary

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a method and a computer program for a base station transceiver in a vehicle. Embodiments may allow an adaption of measurement and mobility procedures to the nature of a vehicle. For example, embodiments may allow decreasing measurement efforts at mobile transceivers when they move along with a vehicle. Embodiments are based on the finding that the handover performance or mobility procedures of or for a mobile transceiver enclosed in a vehicle may be improved by considering criteria such as whether a backhaul link is stable, whether the vehicle is moving, and/or whether one or more doors are open or closed.

Embodiments provide an apparatus for a base station transceiver in a vehicle. The base station transceiver generates at least one cell of a mobile communication system for communicating with one or more mobile transceivers in the vehicle. The apparatus comprises a transceiver module to communicate with the one or more mobile transceivers, and a control module to control the transceiver module. The control module is further configured to provide information related to a measurement configuration to the one or more mobile transceivers using the transceiver module. The information related to the measurement configuration relates to measurements of other cells differing from the at least one cell generated by the base station transceiver. The control module is further configured to obtain information related to measurement results based on the information related to the measurement configuration from the one or more mobile transceivers using the transceiver module, and to determine information related to a speed of the vehicle. The control module is further configured to provide information related to a mobility procedure to the one or more mobile transceivers based on the information related to the measurement results and based on the information related to the speed of the vehicle.

The information related to the mobility procedure may comprise information related to a handover instruction and/or adjusted information related to the measurement configuration. In some embodiments the control module may be further configured to adjust the information related to the measurement configuration based on the information related to the speed of the vehicle. Embodiments may allow adapting or adjusting a measurement configuration based on a speed of the vehicle. Embodiments may provide an advantageous concept for measurement configuration and handover triggering. The control module may be configured to configure the one or more mobile transceivers to carry out neighbor cell measurements at a first higher rate if the information related to the speed of the vehicle indicates a first velocity lying below a speed threshold, and to configure the one or more mobile transceivers to carry out neighbor cell measurements at a second lower rate if the information related to the speed of the vehicle indicates a second velocity lying above the speed threshold. Embodiments may enable measurement rate adaptation depending on a speed of the vehicle. The control module may be configured to switch-off neighbor cell measurements of the one or more mobile transceivers if the information related to the speed of the vehicle indicates a speed lying above a threshold, in some embodiments. Moreover, in further embodiments the control module may be configured to activate neighbor cell measurements of the one or more mobile transceivers if the information related to the speed of the vehicle indicates a speed lying below the threshold. Embodiments may switch measurement activities off when a vehicles speed is high enough and benefits from handover or cell reselections become very unlikely. Embodiments may switch such measurements back on once the vehicle becomes slower and it can be expected that the vehicle comes to a halt or user may leave the vehicle, for example at a bus stop or train station, a parking lot, respectively.

The control module may be further configured to provide the information related to the handover instruction as the information related to the mobility procedure if the information related to the speed of the vehicle indicates a first velocity lying below a speed threshold, and to prevent handover of the one or more mobile transceivers if the information related to the speed of the vehicle indicates a second velocity lying above the speed threshold. Embodiments may base the provision of a handover instruction on the speed of the vehicle and prevent or reduce handover attempts at high speeds, which are likely to fail. In embodiments the information related to the measurement configuration may correspond to information related to handover measurements, and /or the information related to the measurement configuration may correspond to information related to cell selection or cell reselection measurements.

In some embodiments the control module may be configured to obtain information related to a door status of the vehicle and to base the measurement configuration of the one or more mobile transceivers further on the information related to the door status. Embodiments may trigger a handover when a door of the vehicle opens, as it may then become likely that a user leaves the vehicle and needs to handover to an overlaying or neighboring cell. The control module may be configured to configure the one or more mobile transceivers to carry out neighbor cell measurements at the first higher rate if the information related to the door status indicates an open door of the vehicle, and to configure the one or more mobile transceivers to carry out neighbor cell measurements at the second lower rate if the information related to the door status indicates a closed door of the vehicle. Embodiments may reduce measurement effort for as long as the doors of a vehicle are closed. Furthermore, the information related to the speed of the vehicle may comprise information related to the door status of the vehicle and the control module may be configured to provide the information related to the handover instruction if the information related to the door status indicates an open door of the vehicle.

In further embodiments the control module may be configured to broadcast the information related to the measurement configuration to the one or more mobile transceivers using the transceiver module. In some embodiments the control module may be configured to use information related to system information broadcast by the mobile communication system to broadcast the information related to the measurement configuration to the one or more mobile transceivers. Embodiments may provide an efficient information transmission concept to configure neighbor cell measurements for mobile transceivers assigned to mobile relay station transceivers. The control module may be configured to provide the information related to the measurement configuration to the one or more mobile transceivers using dedicated signaling and using the transceiver module. Embodiments may allow dedicated signaling and may configure different measurements for different mobile transceivers. The control module may be configured to provide the information related to the measurement configuration to the one or more mobile transceivers using a signaling radio bearer.

Embodiments further provide a method for a base station transceiver in a vehicle. The base station transceiver generates at least one cell of a mobile communication system for communicating with one or more mobile transceivers in the vehicle. The method comprises communicating with the one or more mobile transceivers, and controlling the transceiver module. The method further comprises providing information related to a measurement configuration to the one or more mobile transceivers. The information related to the measurement configuration relates to measurements of other cells differing from the at least one cell generated by the base station transceiver. The method further comprises obtaining information related to measurement results based on the information related to the measurement configuration from the one or more mobile transceivers, and determining information related to a speed of the vehicle. The method further comprises providing information related to a mobility procedure to the one or more mobile transceivers based on the information related to the measurement results and based on the information related to the speed of the vehicle.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for a base station transceiver in a vehicle;
Fig. 2 shows an embodiment of a vehicle with a mobile relay station transceiver; and
Fig. 3 shows a block diagram of a flow chart of an embodiment of a method for a base station transceiver in a vehicle.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may provide a method to optimize or improve a handover performance for mobile cells located within a car, bus, train or other transportation devices. Embodiments may affect the technical domain of vehicular cells. Vehicular cells are small cells and may reside inside a moving vehicle and connect to a mobile network via an Internet Protocol (IP) link that may be transmitted over a Radio Frequency (RF) infrastructure such as a 3^{rd} Generation Partnership Project (3GPP) Universal Mobile Telecommunication System (UMTS) or 3GPP Long Term Evolution (LTE) network. In the following a vehicular cell may correspond to a cell radiating within a vehicle, an external cell may correspond to a cell of a mobile network outside of a vehicle, and an external base station may correspond to a base station outside of a vehicle.

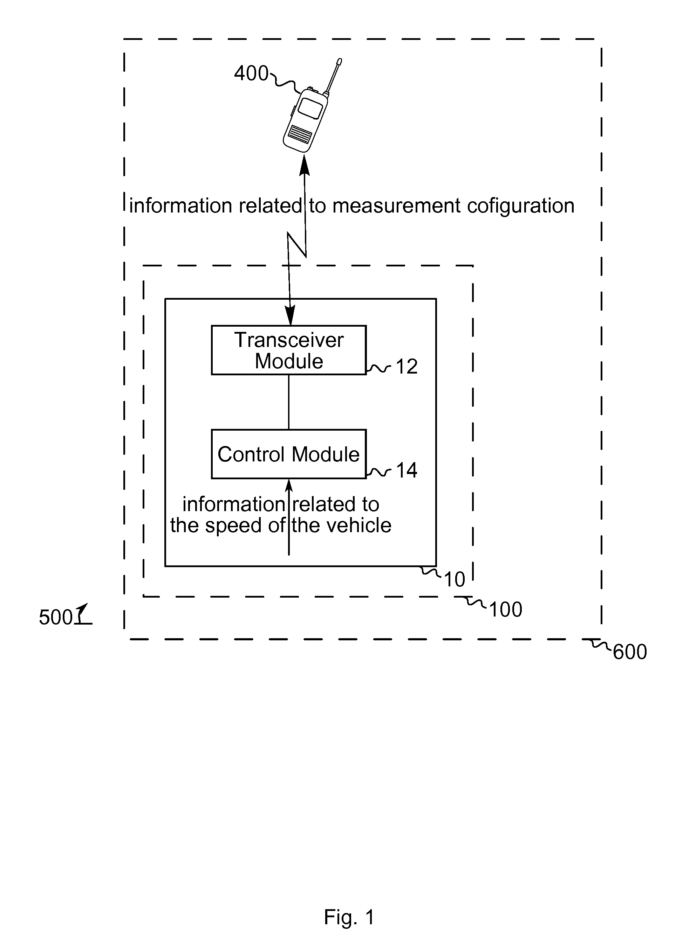

Fig. 1 illustrates a block diagram of an embodiment of an apparatus 10 for a base station transceiver 100 in a vehicle 600. The vehicle may correspond to any vehicle, e.g. a car, a train, a ship, a bus, a plane, a truck etc. The base station transceiver 100 generates at least one cell of a mobile communication system 500 for communicating with one or more mobile transceivers 400 in the vehicle 600. The apparatus 10 comprises a transceiver module 12 to communicate with the one or more mobile transceivers 400 and a control module 14, which is coupled to the transceiver module 12, to control the transceiver module 12. The control module 14 is further configured to provide information related to a measurement configuration to the one or more mobile transceivers 400 using the transceiver module 12. The information related to the measurement configuration relates to measurements of other cells differing from the at least one cell generated by the base station transceiver 100. In embodiments measurements may be configured at the one or more mobile transceivers 400, which may include the serving cell (the at least one cell generated by the base station transceiver 100) and other cells.

Embodiments may influence the measurements related to the other cells based on the information related to the velocity and/or based on a door status as will be detailed subsequently, which allows other measurements taking place at the same time, e.g. those relating to the serving cell. The control module is further configured to obtain information related to measurement results based on the information related to the measurement configuration from the one or more mobile transceivers 400 using the transceiver module 12. The control module 14 is further configured to determine information related to a speed of the vehicle 600, and to provide information related to a mobility procedure to the one or more mobile transceivers 400 based on the information related to the measurement results and based on the information related to the speed of the vehicle 600. A handover decision or measurement adjustments may be based on the information related to the speed of the vehicle and/or door status information.

In embodiments the mobile communication system 500 may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

Embodiments of a mobile relay apparatus may improve the cellular coverage in a vehicle. A relay node may be used in order to connect multiple terminals inside of the vehicle and provide an aggregated connection to a stationary cellular communication system via a wireless backhaul link to a stationary cellular communications network, for example, over an external vehicle antenna. In the following the link between a stationary base station and an external antenna of a vehicle relay node will be denoted as relay link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used. Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

The control module 14 may correspond to one or more control units, one or more control devices, or any means for controlling. In some embodiments a control module 14 may be implemented in software, which is executable on accordingly adapted hardware, such as a processor, a Digital Signal Processor (DSP), a multi-purpose processor, or the like. The transceiver module 12, which may comprise transmitter and receiver elements or components, may correspond to one or more transceiver units, one or more transceiver devices, any means for transceiving (transmitting and or receiving), etc. In embodiments a transceiver module 12 may comprise typical transmitter and/or receiver components. Such components may comprise one or more transmit and/or receive antenna connectors or antennas, a Low Noise Amplifier (LNA), a Power Amplifier (PA), one or more filters, one or more converters, one or more mixers, one or more duplexers, one or more diplexers etc. The information related to the measurement configuration may correspond to information related to handover measurements, and/or the information related to the measurement configuration corresponds to information related to cell selection or cell reselection measurements.

Here and in the following an idle mode is to be understood as a state of a transceiver or the backhaul modem in which it is associated with a cell of a base station transceiver in terms of a registration, such that the transceiver or backhaul modem can be reached in case of a network originated call. In idle mode the transceiver or backhaul modem is assumed not to have an ongoing communication link to the mobile communication system, however, the mobile communication system has information on how to reach the transceiver or backhaul modem, for example, on a cell level, or on a routing/tracking area or a location area level, which may extend across multiple cells. The mobile communication system may then page the transceiver or modem in case an active connection for data exchange should be established through the said registration level, e.g. a cell or multiple cells of a routing area or location area the transceiver or backhaul modem is camped on. The transceiver or modem may then respond to such paging and establish an active communication link, for example, using according random access procedures, radio link establishment procedures etc. The transceiver or backhaul modem may then transfer to an active or connected mode, in which a communication or radio link is established and data exchange can be carried out. As the transceiver or backhaul modem moves through the cells of the mobile communication system its location changes and so do the cells, which cover the location of the transceiver or backhaul modem. The transceiver or backhaul modem may then select or re-select cells to associate or register with in idle mode and associate or handover to different cells in active or connected mode.

The control module 14 may be configured to determine the information related to the speed of the vehicle 600 by means of one or more sensors, sensor units, sensor devices, any means for sensing, etc. For example, an acceleration or velocity sensor may be used. In some embodiments the control module 14 can be configured to receive the information related to the speed of the vehicle from another component, e.g. from a navigation system, and may therefore comprise an accordingly configured interface. In embodiments the interface may correspond to any interface adapted to the respective communication or access technology, which may be wireless or wire line communication. An interface may use a certain access technology, protocol, medium, etc. to establish a connection between the control module 14 and any other component. As an example, in an embodiment the interface may correspond to an Internet Protocol (IP) based communication interface, e.g. a Registered Jack 45 (RJ 45) based connection to exchange information in terms of binary data packets. In embodiments, any other digital or analog interface is conceivable to establish a connection or communication link between the control module 14 and another device being capable of providing the information related to the speed of the vehicle 600.

Conventional UE measurements for handover may be set up by the Radio Access Network (RAN), when the UE enters connected mode. The setup of certain handover measurements may be delayed based on receive level and/or quality measurement results of a serving cell. Such an approach may be applied for inter-frequency or inter-RAT target cell measurements. The information related to the mobility procedure may comprise information related to a handover instruction and/or the information related to a mobility procedure may comprise adjusted information related to the measurement configuration. If the RAN (e.g. an eNodeB) is installed in a vehicle, the conventional approach may have disadvantages in supporting handover to an external cell. Embodiments may provide a handover algorithm considering the movement of the vehicle and other vehicle status information. The control module 14 may be configured to adjust the information related to the measurement configuration based on the information related to the speed of the vehicle 600. The measurement results may be used to decide if a handover should be carried out and to which cell a mobile transceiver should hand over to. For example, the control module 14 may be configured to configure the one or more mobile transceivers 400 to carry out neighbor cell measurements at a first higher rate if the information related to the speed of the vehicle 600 indicates a first velocity lying below a speed threshold. Embodiments may allow adapting a measurement rate at the UEs to the speed of the vehicle, as handovers become more and more unlikely at an increasing speed. If the vehicle moves rather slowly, chances that the vehicle comes to a standstill are higher and chances for potential handover increase. As measurement results may be required to decide which cell to handover to, according measurements can be configured or triggered before. The rate of the measurements may be determined by periodic or event-based measurements. For event-based measurements a higher rate may be achieved by configuring the corresponding condition for the event more sensibly, e.g. by lowering thresholds that trigger the corresponding events.

The control module 14 may be configured to configure the one or more mobile transceivers 400 to carry out neighbor cell measurements at a second lower rate if the information related to the speed of the vehicle 600 indicates a second velocity lying above the speed threshold. For example, at a certain speed some cells, e.g. those which are stationary may be excluded such that a measurement effort can be reduced. Other mobile cells, for example cells installed in the same train, may still be measured as a user may move within the train.

In some scenarios, for example within a car driving along a highway, the control module 14 may be configured to switch-off neighbor cell measurements of the one or more mobile transceivers 400 if the information related to the speed of the vehicle 600 indicates a speed lying above a threshold. For example, if it is known that there is only a single cell available in the car and the backhaul link is stable, there may not be a need for handover or cell reselection such that neighbor cell measurements are switched off. Furthermore, the control module 14 may be configured to activate neighbor cell measurements of the one or more mobile transceivers 400 if the information related to the speed of the vehicle 600 indicates a speed lying below the threshold. Hence, if the car or vehicle becomes slow enough measurements can be activated in order to be ready in case of handover.

For example, the control module 14 may be further configured to provide the information related to the handover instruction as the information related to the mobility procedure if the information related to the speed of the vehicle 600 indicates a first velocity lying below a speed threshold. Such handover may, for example, be carried when a train approaches a train station from the vehicular cell inside the train to an overlaying macro cell covering the train station. As a high amount of signaling traffic can be expected once the train has come to a complete standstill, when people are leaving and getting on the train, embodiments may start such handover when the train becomes slow enough, so a standstill can be foreseen. For example, it may be detected whether a UE in the train moved, e.g. for picking up luggage or towards a door, before instructing such handover.

The control module 14 may be further configured to prevent handover of the one or more mobile transceivers 400 if the information related to the speed of the vehicle 600 indicates a second velocity lying above the speed threshold. Adding to the above, if a train moves rather fast, there may not be a need for considering a handover or cell reselection to one of the stationary cells outside the train.

While the vehicle is moving, handover may be prohibited in some embodiments. On the other hand, the UE or mobile transceiver 400 should have detected neighbor cells already, when the user leaves the vehicle 600. Otherwise the measurement might be received too late to trigger and complete the handover procedure. The handover algorithms in some embodiments may therefore use speed thresholds together with time-to-trigger thresholds to enable and disable handover, e.g. by activating and deactivating the handover measurements of the UE or mobile transceiver 400. In addition the door status may be considered for triggering the handover procedure. The control module 14 may be configured to obtain information related to a door status of the vehicle 600 and to base the measurement configuration of the one or more mobile transceivers 400 further on the information related to the door status. In embodiments, the information related to the speed of the vehicle may comprise information related to the door status, for example, if the information related to the door status indicates an open door, it may be concluded that the vehicle's speed is zero. If the information related to the door status indicates the door is closed, it may be concluded that the vehicle is moving, or moving in a stop-and-go manner, e.g. in traffic or at a traffic light. In embodiments a vehicle may have multiple doors and the information related to the door status may comprise information on multiple doors, e.g. whether all doors are closed, whether at least one door is open, information on individual doors (which ones are open and/or which ones are closed), etc.

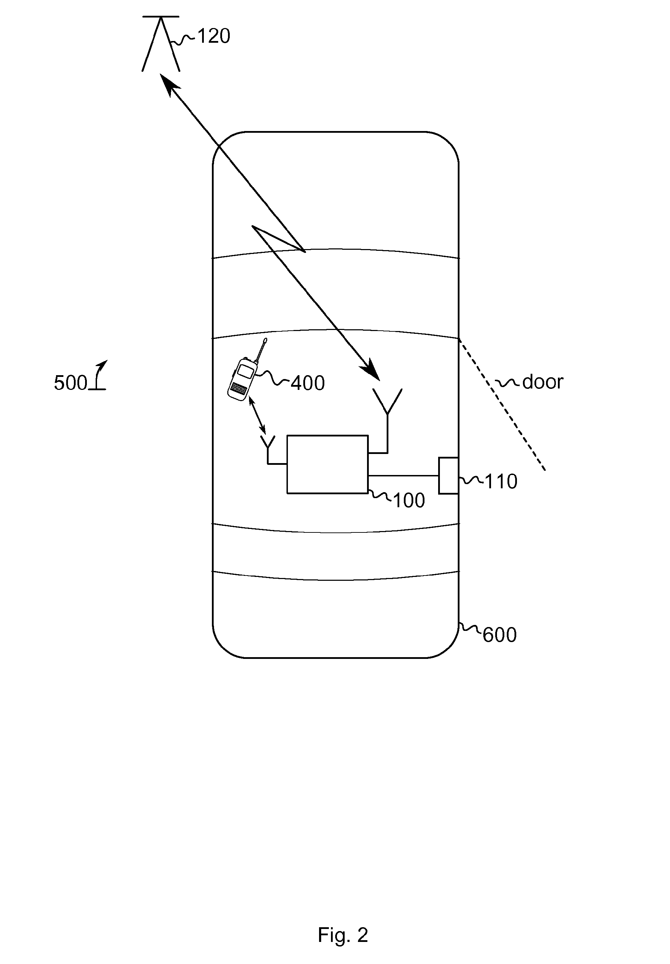

Fig. 2 shows an embodiment of a vehicle 600 with a mobile relay station transceiver 100, which comprises an embodiment of the above described apparatus 10. As shown in Fig. 2 the mobile relay station transceiver 100 communicates with a base station transceiver 120 of a mobile communication system 500, e.g. an UMTS or LTE system, to establish a backhaul link or connection. Inside the vehicle 600 the mobile relay station transceiver 100 establishes an access link to a mobile transceiver 400. In the embodiment depicted in Fig. 2 the mobile relay station transceiver 100, its control module 14, respectively, is coupled to a sensor 110, which provides information related to a door status of the vehicle, e.g. binary information indicating whether the door is open or closed. The control module 14 of the mobile relay station transceiver 100 is further configured to obtain the information related to the door status using the sensor 110. The sensor may correspond to a switch, contact, or push-button sensing at least whether the door is open or closed. The control module 14 is configured to obtain information related to a door status of the vehicle 600 and to base the measurement configuration of the one or more mobile transceivers 400 further on the information related to the door status. For example, cell measurements may be carried out on stationary cells outside the vehicle once the door open, which may, depending on the time required to obtain measurement results, be enough to trigger a handover.

In a further embodiment the control module 14 is configured to configure the one or more mobile transceivers 400 to carry out neighbor cell measurements at the first higher rate if the information related to the door status indicates an open door of the vehicle 600, and to configure the one or more mobile transceivers 400 to carry out neighbor cell measurements at the second lower rate if the information related to the door status indicates a closed door of the vehicle. For example, for as long as the door is closed less frequent measurement may allow determining cells or cell identifications as candidates for potential handover. Once the door opens, more frequent measurements may be taken on said candidates as an actual handover may soon occur.

In some embodiments, the time to determine neighbor cell measurement results may be too long to start or increase a rate of measurements once the door opens, for example, if an actual handover takes 10s, 20s, or 30s after a measurement, measurements may be start earlier, e.g. based on the above-described velocity or speed thresholds. A trigger for the handover procedure may then be based on the information related to the door status. The control module 14 may then be configured to provide the information related to the handover instruction if the information related to the door status indicates an open door of the vehicle 600.

In addition to the speed dependent mobility algorithm in connected mode states where handover is applied, embodiments may also use speed dependent control of the cell selection/reselection performed by a UE 400 in idle mode and connected mode states where applicable. For example, in UMTS Radio Resource Control (RRC)-states Cell_FACH (Forward Access Channel), Cell_PCH (Paging Channel), and URA_PCH may be applicable for cell selection and reselection. Embodiments may change the cell selection/reselection parameters broadcasted in the system information messages of the vehicular cell based on the vehicle's speed such that cell reselection is enabled or disabled. The control module 14 may be configured to broadcast the information related to the measurement configuration to the one or more mobile transceivers 400 using the transceiver module 12. The control module 14 may be configured to use information related to system information broadcast by the mobile communication system 500 to broadcast the information related to the measurement configuration to the one or more mobile transceivers 400.

In further embodiments dedicated signaling may be used to signal information related to measurement configurations. The control module 14 may be configured to provide the information related to the measurement configuration to the one or more mobile transceivers 400 using dedicated signaling and using the transceiver module 12. For example, the control module 14 is configured to provide the information related to the measurement configuration to the one or more mobile transceivers 400 using a signaling radio bearer, e.g. as specified by RRC in UMTS or LTE. In addition the door status can be considered for triggering the change of the cell selection/reselection parameters in line with the above.

Embodiments may increase the reliability of the operation of vehicular cells under changing environmental conditions due to the mobility of the vehicle. Embodiments may provide several benefits. For example, unwanted handovers/cell reselections to an external cell while the vehicle is moving may be avoided. Embodiments may reduce handovers/cell reselections to an external cell for stopped vehicles (e.g. at traffic lights). Embodiments may reduce or even avoid call drops when a user or a mobile transceiver 400 leaves the vehicle 600. Moreover, embodiments may enable faster handover procedures to an external cell and may increase the handover success rate. Furthermore embodiments may enable UE or mobile transceiver battery saving, because measurements of neighbor cells are reduced or suppressed in (fast) moving vehicles 600.

In some embodiments speed dependent UE measurements may be configured and a handover trigger or instruction may be issued speed dependent. Moreover, speed and/or door status dependent enabling/disabling of cell reselection may be carried out. Further embodiments may use any combinations of speed dependent handover and cell reselection.

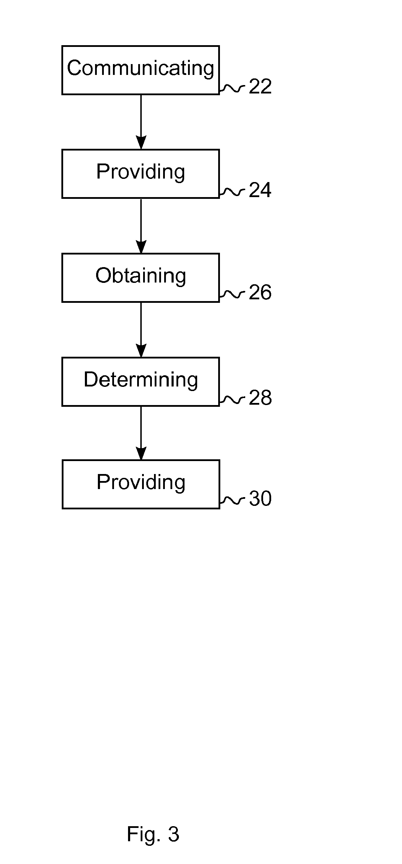

Fig. 3 shows a block diagram of a flow chart of an embodiment of a method for a base station transceiver a base station transceiver 100 in a vehicle 600. The base station transceiver 100 generates at least one cell of a mobile communication system 500 for communicating with one or more mobile transceivers 400 in the vehicle 600. The method comprises communicating 22 with the one or more mobile transceivers 400 and providing 24 information related to a measurement configuration to the one or more mobile transceivers 400. The information related to the measurement configuration relating to measurements of other cells differing from the at least one cell generated by the base station transceiver 100. The method further comprises obtaining 26 information related to measurement results based on the information related to the measurement configuration from the one or more mobile transceivers 400. The method further comprises determining 28 information related to a speed of the vehicle 600. The method further comprises providing 30 information related to a mobility procedure to the one or more mobile transceivers 400 based on the information related to the measurement results and based on the information related to the speed of the vehicle and/or door status information.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transceiving", "means for transmitting", "means for receiving", "means for sensing", etc., may be provided through the use of dedicated hardware, such as "a controller", "a transceiver", "a transmitter", "a receiver", "a sensor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for a base station transceiver (100) in a vehicle (600), the base station transceiver (100) generating at least one cell of a mobile communication system (500) for communicating with one or more mobile transceivers (400) in the vehicle (600), the apparatus (10) comprising
a transceiver module (12) to communicate with the one or more mobile transceivers (400); and
a control module (14) to
control the transceiver module (12),
provide information related to a measurement configuration to the one or more mobile transceivers (400) using the transceiver module (12), the information related to the measurement configuration relating to measurements of other cells differing from the at least one cell generated by the base station transceiver (100),
obtain information related to measurement results based on the information related to the measurement configuration from the one or more mobile transceivers (400) using the transceiver module (12);
determine information related to a speed of the vehicle (600), and
provide information related to a mobility procedure to the one or more mobile transceivers (400) based on the information related to the measurement results and based on the information related to the speed of the vehicle (600).

2. The apparatus (10) of claim 1, wherein information related to the mobility procedure comprises information related to a handover instruction and/or wherein the information related to a mobility procedure comprises adjusted information related to the measurement configuration.

3. The apparatus (10) of claim 2, wherein the control module (14) is further configured to configure the one or more mobile transceivers (400) to carry out neighbor cell measurements at a first higher rate if the information related to the speed of the vehicle (600) indicates a first velocity lying below a speed threshold, and to configure the one or more mobile transceivers (400) to carry out neighbor cell measurements at a second lower rate if the information related to the speed of the vehicle (600) indicates a second velocity lying above the speed threshold.

4. The apparatus (10) of one of the preceding claims, wherein the control module (14) is configured to switch-off neighbor cell measurements of the one or more mobile transceivers (400) if the information related to the speed of the vehicle (600) indicates a speed lying above a threshold, and/or wherein the control module (14) is configured to activate neighbor cell measurements of the one or more mobile transceivers (400) if the information related to the speed of the vehicle (600) indicates a speed lying below the threshold.

5. The apparatus (10) of one of the preceding claims, wherein the control module (14) is further configured to provide information related to the handover instruction as the information related to the mobility procedure if the information related to the speed of the vehicle (600) indicates a first velocity lying below a speed threshold, and to prevent handover of the one or more mobile transceivers (400) if the information related to the speed of the vehicle (600) indicates a second velocity lying above the speed threshold.

6. The apparatus (10) of one of the preceding claims, wherein the information related to the measurement configuration corresponds to information related to handover measurements.

7. The apparatus (10) of one of the preceding claims, wherein the information related to the measurement configuration corresponds to information related to cell selection or cell reselection measurements.

8. The apparatus (10) of one of the preceding claims, wherein the control module (14) is configured to obtain information related to a door status of the vehicle (600) and to base the measurement configuration of the one or more mobile transceivers (400) further on the information related to the door status.

9. The apparatus (10) of claim 8, wherein the control module (14) is configured to configure the one or more mobile transceivers (400) to carry out neighbor cell measurements at the first higher rate if the information related to the door status indicates an open door of the vehicle (600), and to configure the one or more mobile transceivers (400) to carry out neighbor cell measurements at the second lower rate if the information related to the door status indicates a closed door of the vehicle.

10. The apparatus (10) of one of the preceding claims, wherein the information related to the speed of the vehicle comprises information related to a door status of the vehicle (600) and wherein the control module (14) is configured to provide the information related to a handover instruction if the information related to the door status indicates an open door of the vehicle (600).

11. The apparatus (10) of one of the preceding claims, wherein the control module (14) is configured to broadcast the information related to the measurement configuration to the one or more mobile transceivers (400) using the transceiver module (12).

12. The apparatus (10) of one of the preceding claims, wherein the control module (14) is configured to use information related to system information broadcast by the mobile communication system (500) to broadcast the information related to the measurement configuration to the one or more mobile transceivers (400).

13. The apparatus (10) of one of the preceding claims, wherein the control module (14) is configured to provide the information related to the measurement configuration to the one or more mobile transceivers (400) using dedicated signaling and using the transceiver module (12), and/or wherein the control module (14) is configured to provide the information related to the measurement configuration to the one or more mobile transceivers (400) using a signaling radio bearer.

14. A method for a base station transceiver (100) in a vehicle (600), the base station transceiver (100) generating at least one cell of a mobile communication system (500) for communicating with one or more mobile transceivers (400) in the vehicle (600), the method comprising
communicating (22) with the one or more mobile transceivers (400); and
providing (24) information related to a measurement configuration to the one or more mobile transceivers (400), the information related to the measurement configuration relating to measurements of other cells differing from the at least one cell generated by the base station transceiver (100),
obtaining (26) information related to measurement results based on the information related to the measurement configuration from the one or more mobile transceivers (400);
determining (28) information related to a speed of the vehicle (600); and
providing (30) information related to a mobility procedure to the one or more mobile transceivers (400) based on the information related to the measurement results and based on the information related to the speed of the vehicle.

15. A computer program having a program code for performing the method of claim 14, when the computer program is executed on a computer, a processor, or a programmable hardware component.
